# EUROPEAN PATENT APPLICATION

(11) **EP 1 843 575 A1**
(43) Date of publication of application: **10.10.2007**
(21) Application number: 06425231.5
(22) Date of filing: 03.04.2006
(51) Int. Cl.: H04N 5/44

(54) **Electronic device for receiving and displaying data coming from a multimedia PC and/or from another receiver/decoder**

(71) Applicant: C.I.D.P., 35033 Treponti Di Teolo PD (IT)
(72) Inventor: Pedron, Dante, 35033 Treponti di Teolo (PD) (IT)
(74) Representative: Vinci, Marcello

(57) **Abstract**

The invention is a new electronic device (D) for multimedia PCs, connected to at least one audio output, to at least one video output and to at least one interface of said multimedia PC, to at least one piece of equipment for receiving and/or decoding audio and video signals, or Set Top Box, and to at least one power supply unit, and wherein said device (D) receives the incoming audio and video signals and/or the data coming from said multimedia PC and/or from said receiving and decoding equipment, and sends out the data transmitted by said multimedia PC or the audio and video signals coming from said receiving and decoding equipment.

## Description

The present patent concerns electronic devices for receiving and displaying sound and video data and in particular it concerns a new electronic device for multimedia PCs for receiving and displaying sound and video data coming from multimedia PCs and/or from STB and/or other types of receivers or decoders.

The use of multimedia PCs, also called Media Centers, which employ one or more STB, Set Top Box, and/or IRD, Integrated Receiver and Decoder, for receiving and decoding sound and video data and for displaying television programmes is known.

Said STBs and said IRDs are devices that receive and/or decode sound and video signals, previously coded by television companies, at the moment of broadcasting.

At present, therefore, it is possible to display television programmes commonly broadcast through digital terrestrial systems, satellite TV, Pay per View, cable TV, by simply using a multimedia PC connected to a STB, a monitor or a television set.

The main drawback of the known multimedia PCs is represented by the fact that in case of failure or malfunction of the PC it is not possible to watch the television programmes any longer, at least until the broken or malfunctioning components have been repaired.

Furthermore, it is also known that immediately after starting the PC, the operating system must be loaded, and this process takes 1-2 minutes or even more.

During this lapse of time it is not possible to access any PC function and therefore it is not possible to watch television programmes.

On the other hand, it is not advisable to integrate the multimedia PC and the STB, since, in case of malfunction of one or more components of one or the other piece of equipment, the user cannot use either of them until the faults have been repaired.

In order to overcome the above mentioned drawbacks, a new type of electronic device for multimedia PCs, for receiving and displaying sound and video data coming from multimedia PCs and/or from STBs and/or other types of receivers or decoders has been designed and implemented.

The main aim of the present invention is to allow television programmes to be received and displayed even if the PC is off or is not functioning.

Another aim of the present invention is to allow access to television programmes even while the operating system is being loaded, immediately after starting the PC.

Another aim of the present invention is to allow access to television programmes even while the PC is off.

A further aim of the invention is to propose an electronic device that can be applied to any type of multimedia PC, by using standard connections.

These and other direct and complementary objects are achieved through the implementation of the new electronic device for multimedia PCs, for receiving and displaying sound and video data coming from multimedia PCs and/or from STBs and/or other types of receivers or decoders.

The present invention is an electronic device suited to be applied to one or more multimedia PCs.

According to the invention, said device can also be installed inside said multimedia PC, in which case we can refer to said device as an integrated device.

According to the invention, said new electronic device can be installed externally, as an external unit that can be connected to the central unit, that is, said multimedia PC, and to the other electronic devices, as described and claimed below.

The new device receives the video signals coming from the video output of the multimedia PC and the STB.

Said video signals are made up of the three components of RGB colour model (Red, Green, Blue) and by the Earth.

Analogously, the new device receives the audio signals coming from the audio output of the multimedia PC and the STB.

Said audio signals are made up of the two Right and Left channels and by the Earth.

The sound and video signals are then received by the connection hardware, which has the function to adapt said signals for successive processing inside the circuit.

The new device is also connected to said multimedia PC via at least one data interface, for example a serial port, a USB port or the like, through which data are transferred from said multimedia PC to said new device.

The new device is also connected to at least one power supply unit, which can be located inside said multimedia PC, when the new device is installed inside the PC itself, or can be any external source, when the new device is installed as an external unit.

The video signals are then sent to at least one switching unit, managed via at least one microcontroller, which in turn can be operated through the commands coming from said multimedia PC.

In the same way, the audio signals are sent to at least one further switching unit, which is also managed by said microcontroller.

Said switching units have the function to send to the output the signals coming from the STB, even in the absence of information or power supply from the multimedia PC.

In other words, when the new device does not receive any specific command from the multimedia PC, the programmes coming from said STB are displayed on the screen.

In these conditions, in case of failure or malfunction of one or more components of the multimedia PC, it is still possible to access the television programmes transmitted by the STB.

The audio and video signals coming from the respective switching units are sent to the corresponding outputs via the connection hardware.

The new device is then connected, at the output, with at least one monitor or television set for displaying the television signal and with two or more loudspeakers for the audio signals.

The new device allows the multimedia PC to be used as usual, with the difference that in case of failure or malfunction of the multimedia PC itself, it is still possible to watch and listen to the television programmes coming from the STB.

The advantages offered by the new device are therefore numerous.

First of all, the new device can be applied to any type of multimedia PC, since it employs standard connections that are used universally.

Furthermore, the new device can be installed either inside the PC, and be therefore integrated in the same, or externally, as an external unit.

As already explained, in case of malfunction of one or more of the components of the multimedia PC, it is possible to display the television signal coming from the STB.

Furthermore, when the multimedia PC is functioning, it is possible to display on the monitor the data of the multimedia PC itself, like with a normal PC, since said data are transmitted through said interface, serial port, USB port or the like.

While loading the operating system of the PC, furthermore, it is possible to display the television signals transmitted by the STB, while with the known multimedia PCs it is necessary to wait until the operating system has been loaded before being able to carry out any type of operation.

In the same way, while the multimedia PC is being switched off, it is possible to display the television signals transmitted by the STB, whereas without the new device it is not possible to display anything while switching off the PC.

The characteristics of the present invention will be highlighted in greater detail in the following description, with reference to the enclosed drawings, attached as an examples without limitation.

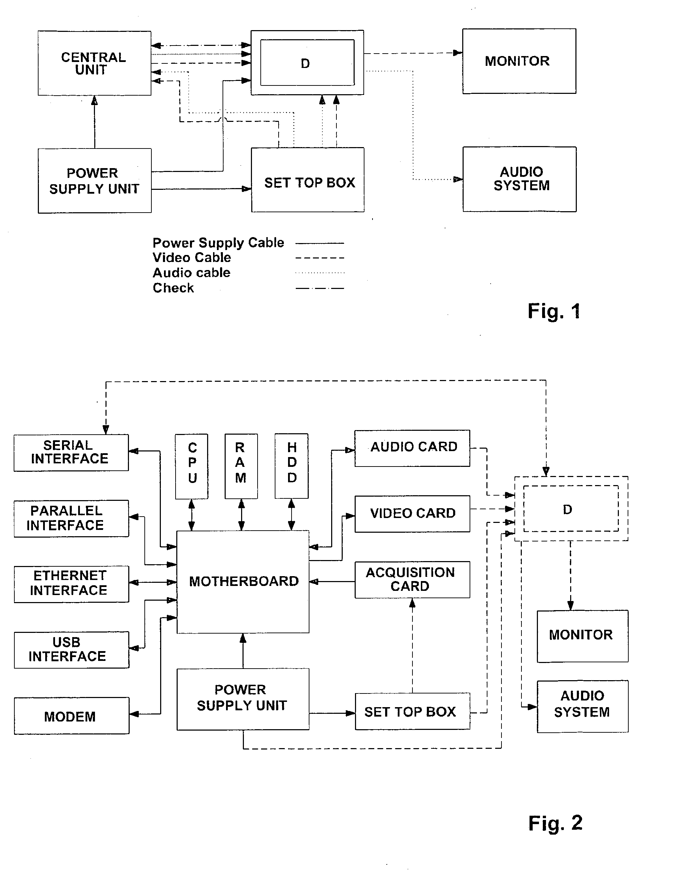

Figure 1 and 2 show the diagrams of connection of the new device (D) to the electronic components of the multimedia PC, to the Set Top Box and, at the output, to the screen and the sound system.

Figure 3 diagrammatically represents the operation of the new device (D).

Figures 4 and 5 show the flow charts of the operating logic of the new device (D) during switching on and off.

The new device (D) is connected to the central unit, that is, to the multimedia PC, via video cable, audio cable and control cable, to the Set Top Box via video and audio cable, to at least one power supply unit via power supply cable, and, at the output, to at least one monitor via video cable, and to at least one audio system via audio cable.

Said audio system, for example, is constituted by two or more loudspeakers for sending out audio signals.

In particular, the new device (D) is connected to at least one video output, to at least one audio output of the multimedia PC and to at least one PC interface for the transmission of data and commands.

The audio and video signals coming from the multimedia PC and the audio and video signals coming from the STB are processed by the connection hardware and transmitted to at least one switching unit, connected to a microcontroller (mC) that can be operated by the commands of the PC, to which it is connected via said interface.

Said microcontroller (mC) is also connected to at least one power supply unit.

The audio and video signals are then sent to the outputs through the connection hardware.

The new device (D) is connected at the output to at least one monitor, screen or television set, and at least to one audio system.

At the moment of switching on, that is, during the PC starting phase, the new device (D) is in condition A, that is, directly connected to said Set Top Box, whose television signals can thus be displayed on the monitor.

After starting the PC, the operating system (OS) is loaded.

The new device (D) remains in said condition A until both conditions are met, that is, until the PC has been started and the operating system (OS) has been loaded.

Once the PC is running and the operating system has been loaded, if the corresponding switching command is given, the new device (D) passes from condition A to condition B.

In condition B, the new device (D) is connected to the multimedia PC and therefore it is possible to display the data coming from the PC itself.

The device (D) remains in condition B until the condition check verifies that the multimedia PC keeps functioning. In case of failure or malfunction of the PC, therefore, the new device (D) returns to operating condition A.

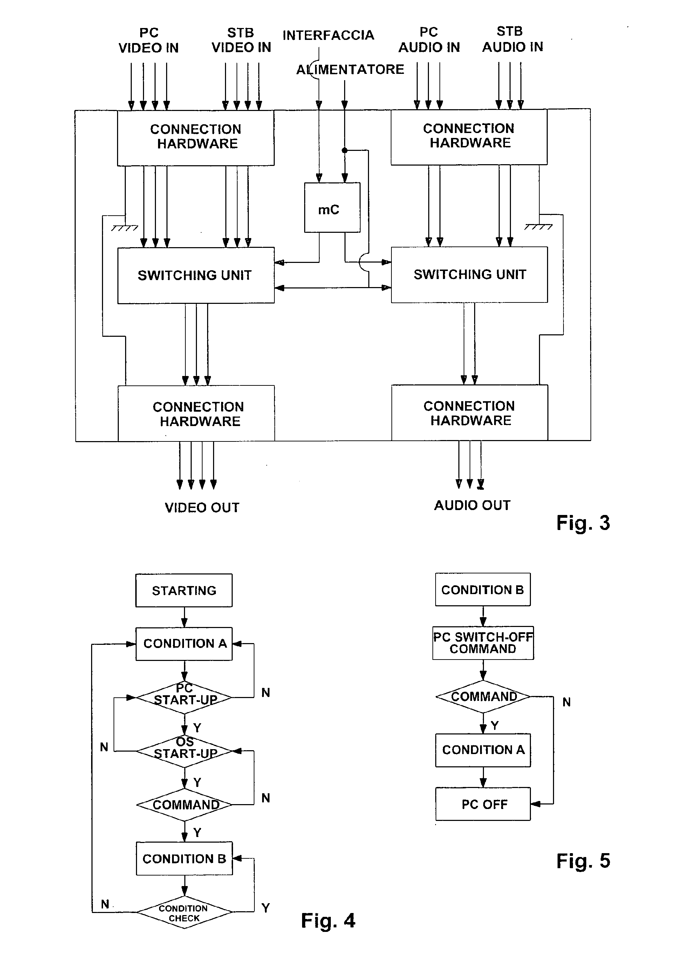

As shown in Figure 5, when the PC is switched off the device (D) waits for the command that switches it over to condition A, if any.

If this command is given, the new device (D) returns to condition A, which means that the television signals coming directly from the Set Top Box are displayed on the screen.

If no command for the switching over is given, instead, the new device remains in condition B until the PC has switched off.

Therefore, with reference to the above description and the attached drawings, the following claims are expressed.

## Claims

1. New electronic device (D) for multimedia PC, **characterized in that** it is connected to at least one audio output, to at least one video output and to at least one interface of said multimedia PC, to at least one piece of equipment for receiving and/or decoding audio and video signals, or Set Top Box, and to at least one power supply unit, and wherein said device (D) receives the incoming audio and video signals and/or the data coming from said multimedia PC and/or from said equipment for receiving and decoding signals, and sends out the data transmitted by said multimedia PC or the audio and video signals coming from said receiving and decoding equipment.

2. New device (D) according to claim 1, **characterized in that** it comprises one or more switching units of said audio and video signals coming from said multimedia PC and/or from said receiving and/or decoding equipment, managed by at least one microcontroller (mC) connected to said interface and to said power supply unit, and wherein said switching units send out the signals coming from said receiving and decoding equipment, until said microcontroller gives specific commands for transmitting the data coming from said multimedia PC.

3. New device (D) according to claims 1, 2, **characterized in that** in the absence of said commands for transmitting the data coming from said multimedia PC, said switching units transmit the signals coming from said receiving and/or decoding equipment.

4. New device (D) according to claims 1, 2, 3, **characterized in that** the audio and video signals reaching said device (D) are processed by specific connection hardware and adapted for subsequent processing.

5. New device (D) according to claims 1, 2, 3, 4, **characterized in that** the audio and video signals leaving said switching units are processed by specific connection hardware before being sent out from said device (D).
